# EUROPEAN PATENT SPECIFICATION

(11) **EP 1 106 825 B1**
(45) Date of publication and mention of the grant of the patent: **02.05.2007**
(21) Application number: 00126420.9
(22) Date of filing: 05.12.2000
(51) Int. Cl.: F03D 11/04, F03D 1/02

(54) **A wind-powered generator plant**
Windkraftanlage
Eolienne

(30) Priority: 07.12.1999 JP 34799499
(43) Date of publication of application: 13.06.2001
(73) Proprietor: MITSUBISHI HEAVY INDUSTRIES, LTD., Tokyo (JP)
(72) Inventor: Honda, Akihiro, Mitsubishi Heavy Industries, Ltd., Nagasaki, Nagasaki-ken (JP); Saito, Toru, Mitsubishi Heavy Industries, Ltd., Nagasaki, Nagasaki-ken (JP)
(74) Representative: HOFFMANN EITLE

(56) References cited:
- DE-A- 3 224 976
- NL-C- 1 008 318
- US-A- 4 323 331

## Description

### BACKGROUND OF THE INVENTION

### 1. Field of the Invention

The present invention relates to an aerogenerator plant or a wind-powered generator plant which utilizes wind power to generate electricity. More specifically, the present invention relates to a wind-powered generator plant having a plurality of generators, driven by windmills, installed on a structure floating on water.

### 2. Description of the Related Art

An aerogenerator system or a wind-powered generator system which converts the kinetic energy of windmills driven by wind power into electricity is known in the art. A wind-powered generator system is a "clean" electric generating system since it does not require fuel for combustion. However, since a wind-powered generator system requires a stable wind, availability of sites suitable for constructing a wind-powered generator plant is rather limited on the land.

On the other hand, since it is relatively easy to find a site on water where a stable wind can be obtained, it is possible to construct a wind-powered generator plant on water such as a lake or the sea.

When a wind-powered generator plant is constructed in shallow water, a wind-powered generator plant can be constructed as a fixed type plant in which a substructure is constructed on the lake bottom or sea bed and windmill generator sets are placed on a superstructure constructed on the substructure. However, if the water is deep, it is not practical to construct a fixed type wind-powered generator plant since the cost for constructing the substructure becomes very high.

Therefore, when the water is deep, a floating-type wind-powered generator, in which windmill generator sets are installed on a floating body, is used.

An example of a floating-type wind-powered generator plant is disclosed, for example, in Japanese Unexamined Patent Publication No. 3-57885, or in DE3224976.

For the wind-powered generator plant in the '885 publication, a floating body is built as a framework lying on a single plane (i.e., truss structure) using steel pipes, and a plurality of windmill generator sets are installed on the floating body. The invention of the '885 publication is intended to reduce the construction cost of a floating body for a floating type wind-powered generator plant by constructing the floating body as a truss structure using steel pipes.

However, when the number of the windmill generator sets installed on the floating body increases, the cost for constructing the floating body increases and the unit power generating cost of the plant becomes excessively high even if a truss structure of pipes as disclosed in the '885 publication is used for the floating body.

When more than two windmill generator sets are used, if the windmills are disposed close to each other in the direction of the wind, the power generation efficiency of the downwind windmill generator set decreases due to the influence of the upwind windmill generator set. Therefore, when two or more windmill generator sets are used in a wind-powered generator plant, the interval between the windmill generator sets adjacent to each other in the direction of the wind must be sufficiently large. Especially in the case where the wind direction is not constant, i.e., when daily or seasonal changes in the wind direction can be expected, the intervals between the windmills adjacent to each other in all possible wind direction must be sufficiently large.

In general, when the distance between the adjacent windmill generator sets in the wind direction decreases, the power generation efficiency of the downwind windmill generator set decreases. The power generation efficiency of a windmill generator set is defined as a ratio of an amount of electric power generated by a windmill generator set when it is disposed adjacent to another windmill generator set and an amount of electric power generated by the same windmill generator set when it is disposed alone in the same wind conditions. Therefore, heretofore, it was believed that a total power generation efficiency of a wind-powered generator plant rapidly decreases and, thereby, the unit power generating cost of the wind-powered generator plant as a whole rapidly increases as the distance between the windmill generator sets in the plant decreases. A total power generation efficiency of a wind-powered generator plant is defined as a ratio between an actual amount of the power generation of the plant as a whole and a sum of the amounts of the power generation of the respective windmill generator sets when the respective windmill generators are disposed alone in the same wind conditions.

In general, in order to suppress the increase in the unit power generating cost of the wind-powered generator plant to within a practical range, the maximum allowable reduction in the total power generation efficiency of the plant when two or more windmill generator sets arranged in the direction of the wind is about 20%. According to a commonly used estimation method for the total power generation efficiency, it was believed that a distance greater than four times the diameter of rotors of the windmills would be required between the centers of the windmills, i.e. the distance between the hubs of the respective rotors of the windmills must be larger than four times the rotor diameter in order to keep the reduction of the total power generation efficiency of the plant less than 20%.

In the case where the wind-powered generator plant uses 1 mega-watt class windmill generator sets, the diameter of the rotors of the windmills is about 60 meters. This requires a minimum of 240 meters between the respective windmill generator sets. A 240 meter distance between the windmill generator sets does not involve serious problems in a land-based wind-powered generator plant. However, in a floating type wind-powered generator plant, the size of the floating body on which the windmill generator sets are installed becomes extremely large if the hub distance between the respective windmill generator sets must be larger than 240 meters. This causes a serious increase in the construction costs of the floating body and, even though the decrease in the power generation efficiency is maintained within the allowable value, the unit power generating cost of the plant, including the construction cost of the floating body, becomes excessively high.

### SUMMARY OF THE INVENTION

In view of the problems in the related art as set forth above, the object of the present invention is to reduce the unit power generating cost of a floating type wind-powered generator plant to a practical level by suppressing the increase in the construction cost of the floating body.

The objects as set forth above is achieved by a wind-powered generator plant, according to claim 1.

According to the present invention, the distances between the centers of the rotors of the windmills of the windmill generator sets are set at a value smaller than the conventional minimum value of four times the rotor diameter.

When more than two windmill generator sets are installed on a floating body, particularly in the case where the direction of the wind changes in accordance with time of the day or time of the year, the hub distance between the windmill generator sets adjacent in all direction to each other must be larger than a certain minimum value (a value required for keeping the reduction of the power generation efficiency of the windmill generator sets within an allowable range). Therefore, the upper surface area of the floating body increases in proportion to a square of the minimum hub distance. The construction cost of a floating body increases, for example, in proportion to the upper surface when a box-shaped floating body is used. Therefore, the construction cost of the floating body increases in proportion to a square of the hub distance when a box-shaped floating body is used. When a truss structure is used for the floating body as disclosed in the '885 publication, although the construction cost can be lower than the case where a box-shaped floating body is used, the construction cost of the floating body still increases at a rate larger than a value proportional to the hub distance and less than a value proportional to a square of the hub distance.

In order to reduce the construction cost of the floating body, therefore, it is necessary to reduce the hub distance. However, heretofore, it was believed that it is not possible to reduce the hub distance to a value lower than the minimum distance of four times the rotor diameter. If the hub distance was reduced to a value lower than this minimum distance, it was believed that the increase in unit power generating cost of the plant due to the decrease in the total power generation efficiency would exceed the decrease in the construction cost of the floating body.

As a result of repeated experiments, the inventors found that the total power generation efficiency of the wind-powered generator plant does not decrease, as it was believed heretofore, when the hub distance becomes smaller than four times of the rotor diameter. It was found by the inventors that, actually, the total power generation efficiency of the wind-powered generator plant decreases very slowly as the hub distance decreases, in contrast to what was believed heretofore, even in the range where the hub distance is smaller than four times the diameter of the rotor.

In other words, it was found by the inventors that, although the total power generation efficiency of the plant decreases as the hub distance decreases, the increase in the unit power generating cost due to the decrease in the power generation efficiency is smaller than the decrease in the unit power generating cost due to the reduction of the construction cost by reducing the hub distance. Therefore, in contrast to what was believed heretofore, it was found that the unit power generating cost of the wind-powered generator plant can be reduced by reducing the hub distance to a value less than four times of the rotor of the windmill.

In the present invention, based on the findings explained above, the unit power generating cost of the wind-powered generator plant is largely lowered by reducing the hub distance between the windmill generator sets to a value smaller than four times the diameter of the rotor of the windmill, as set out in claim 1.

### BRIEF DESCRIPTION OF THE DRAWINGS

The present invention will be better understood from the description, as set forth hereinafter, with reference to the accompanying drawings in which:
Fig. 1 is a schematic perspective view of a floating type wind-powered generator plant according to an embodiment of the present invention;
Fig. 2 shows a relationship between a windmill interval ratio and a power generation efficiency;
Fig. 3 shows a relationship between a windmill interval ratio and a unit power generating cost taking into account the decrease in the power generation efficiency;
Fig. 4 is a schematic perspective view of a floating type wind-powered generator plant according to another embodiment of the present invention;
Fig. 5 is a schematic perspective view showing an embodiment of the present invention which is different from those in Figs. 1 and 4; and
Fig. 6 is a schematic perspective view showing another embodiment of the present invention which is different from those in Figs. 1, 4 and 5.

### DESCRIPTION OF THE PREFERRED EMBODIMENT

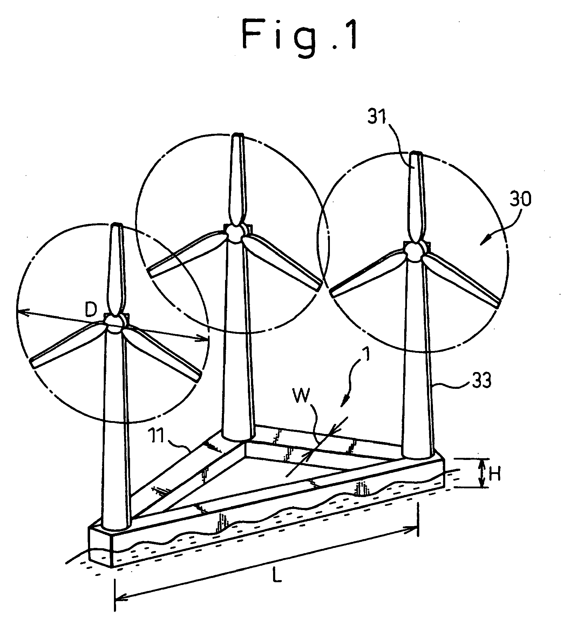

Hereinafter, embodiments of the wind-powered generator plant according to the present invention will be explained with reference to Figs. 1 through 6.

Fig. 1 is a perspective view showing an embodiment of the floating type wind-powered generator plant according to the present invention.

In Fig. 1, reference numeral 1 designates a floating body constructed as a structure floating on water, numeral 30 designates a windmill generator set for power generation. In this embodiment, the structure forming the floating body is constructed by combining hollow beam members. Each of the hollow beam members has a rectangular cross section and, in this embodiment, three beam members having an identical length are connected to each other in such a manner that the respective members form a respective side of an equilateral triangle-shape floating body. On the floating body, at each of the three corners of the triangle, a windmill generator set is disposed.

As can be seen from Fig. 1, each of the windmill generator sets 30 includes a rotor 31 being rotated by wind and a tower 33 for supporting the rotor 31. The position of the rotor 31 is controlled so that it turns around the center axis of the tower 31 in response to changes in the wind direction so that the rotor 31 always faces the upwind direction. The rotation of the rotor 31 is converted into electricity by a generator (not shown) and sent to the land through an electric power cable.

The hollow beam members 11 of the floating body, which forms the respective sides of the triangle, are constructed by welding steel plates. Each beam member has a rectangular cross section of, for example, about five meters wide (W in Fig. 1) and eight meters high (H in Fig. 1). Each structural member 11 is fabricated and connected to each other in order to form a triangular floating body 1, for example, using a conventional facility such as that of an existing shipyard. After completing the construction thereof, the floating body 1 is towed to a plant site where the floating body 1 is fixed by an anchor cable.

In the embodiment in Fig. 1, the diameter of the rotor 31 (D in Fig. 1) is about forty-five meters, while the length of each side of the floating body 1 (L in Fig. 1) is about sixty meters. In other words, the distance between the centers of the windmills 30 (the distance between the rotor hubs) is set at about 1.3 times of the rotor diameter.

As explained before, the total power generation efficiency of the wind-powered generator plant decreases as the hub distance between two adjacent windmill generator sets decreases. Heretofore, it was believed that the power generation efficiency of the downwind windmill generator set decreases in proportion to the hub distance to the upwind windmill generator set and the power generation efficiency of the downwind windmill generator set decreases to about 80% when the hub distance is about four times of the rotor diameter. Further, it was believed that the power generation efficiency continues to decrease in proportion to the hub distance also in the region where the hub distance is smaller than four times of the rotor diameter. In general, the maximum allowable reduction in the power generation efficiency of the downwind windmill generator sets is about 20% when two or more windmill generator sets are arranged in the wind direction. Therefore, it was believed that the allowable minimum hub distance between the windmill generator sets is about four times of the rotor diameter and, if the hub distance is smaller than four times of the rotor diameter, the unit power generating cost of the plant as a whole increases sharply since the increase of the unit power generating cost due to the decrease in the power generation efficiency of the windmill generator sets exceeds the decrease in the unit power generating cost due to the decrease in the construction cost of the floating body.

However, according to the research by the inventors, the decrease in the power generation efficiency of the downwind windmill generator sets due to the decrease in the hub distance to the upwind windmill generator sets is much smaller than was believed heretofore.

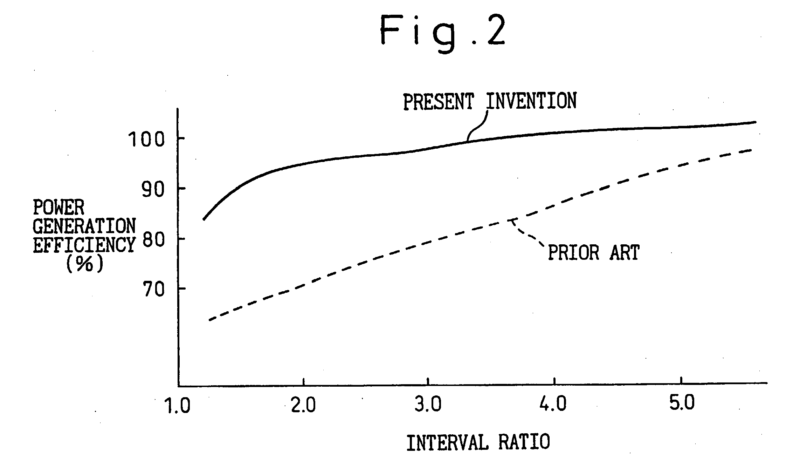

Fig. 2 is a graph showing the change in the power generation efficiency due to the change in the hub distance of windmill generator sets according to the inventors' research. In Fig. 2, horizontal axis denotes an interval ratio which is defined by the ratio between the hub distance between the windmill generator sets and the diameter of the rotor and the vertical axis denotes the plant power generation efficiency of the plant which is defined by a ratio between an actual amount of the power generation of the plant as a whole and a sum of the amounts of the power generation of the respective windmill generator sets when the respective windmill generators are disposed alone in the same wind conditions. The solid line in Fig. 2 shows the result of the inventors' research and the broken line in Fig. 2 shows a calculated value based on the conventional estimation method, respectively.

According to the conventional estimation method, as can be seen from the broken line in Fig. 2, the total power generation efficiency decreases in proportion to the interval ratio and, the total power generation efficiency decreases to the maximum allowable limit (80%) when the interval ratio decreases to about 4 (i.e., when the hub distance decreases to about four times of the rotor diameter). Further, in the region where the interval ratio is smaller than 4, the total power generation efficiency continues to decrease in proportion to the interval ratio. Thus, when a plurality of windmill generator sets are to be installed on a floating body, a minimum of four times the rotor diameter is required for the hub distance. Therefore, it was believed that the unit power generating cost could not be reduced by reducing the hub distance to a value lower than four times of the rotor diameter.

In contrast to the conventional estimation method, according to the inventors' research, based on experiment, indicated by the solid line in Fig. 2, although the total power generation efficiency decreases as the interval ratio decreases, the rate of decrease is much smaller than that of the conventional estimation method. In addition to that, it was found that the total power generation efficiency actually changes only slightly in the region where the interval ratio is between 4.0 and 1.5. As can be seen from the solid line in Fig. 2, the total power generation efficiency decreases in accordance with the decrease in the interval ratio when the interval ratio is less than 1.5.

Therefore, according to the inventors' research, it was found that the size of the floating body could be reduced to the extent where the interval ratio is about 1.5 without any accompanying substantial decrease in the total power generation efficiency. This means that the unit power generating cost of the floating type wind-powered generator plant decreases as the interval ratio decreases as long as the interval ratio is larger than about 1.5. However, since the total power generation efficiency decreases rather steeply as the interval ratio decreases when the interval ratio is smaller than 1.5, there exist a point where the increase in the unit power generating cost due to the reduction in the total power generation efficiency exceeds the decrease in the unit power generating cost due to the decrease in the construction cost of the floating body in the region where the interval ratio is smaller than 1.5. Therefore, it is considered that an optimum interval ratio where the unit power generating cost becomes minimum is less than 1.5. Since the interval ratio cannot be reduced to less than 1.0 in order to avoid interference between the rotors of neighboring windmills, the optimum interval ratio exists in the region between 1.5 and 1.0.

The optimum interval ratio changes according to various factors such as the location of the plant site, type and shape of the floating body, wind velocity and the characteristics in the change of wind direction etc.

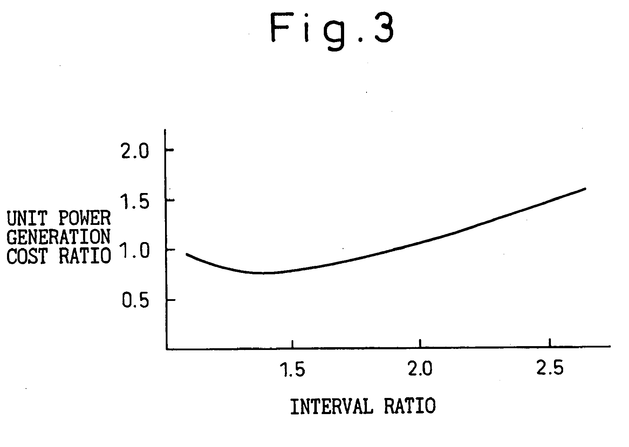

Fig. 3 is a graph showing an example of the relationship between the unit power generating cost of a floating-type wind-powered generator plant and the interval ratio of the windmill generator sets installed thereon. Fig. 3 shows a case where the triangular floating body made of hollow beam members having rectangular cross sections, as shown in Fig. 1, is used. The unit power generating cost is calculated taking into account the decrease in the total power generation efficiency of the plant due to a decrease in the hub distance.

The vertical axis in Fig. 3 denotes a ratio of the unit power generating cost assuming that the unit power generating cost is 1.0 when the interval ratio is 2.0 and the horizontal axis denotes the interval ratio.

As explained above, the unit power generating cost decreases as the interval ratio decreases in the region where the interval ratio is larger than about 1.5 and, becomes minimum at the interval ratio less than 1.5 (for example, about 1.3). The unit power generating cost increases as the interval ratio increases when the interval ratio is less than this point (about 1.3). Therefore, the optimum interval ratio where the unit power generating cost becomes minimum is about 1.3 in this case. In the embodiment in Fig. 1, the interval ratio is set at this optimum value, i.e., the hub distance between the windmill generator sets (L = 60 meters) is set at a value about 1.3 times of the rotor diameter (D = 45 meters).

Though the total power generation efficiency does not substantially change in the region where the interval ratio is larger than 1.5 in the case shown in Fig. 2, the actual interval ratio where the decrease in the power generation efficiency starts varies in accordance with wind conditions such as characteristics of the changes in the velocity and the direction of wind.

Therefore, taking into account this variation, it is preferable to set the hub distance between the windmill generator sets at a value between 1.5 and 2 times the rotor diameter in order to avoid a relatively large change in the total power generation efficiency of the plant due to changes in the wind conditions.

Though the floating body is constructed as a triangular structure made by combining hollow rectangular cross section beam members in the embodiment in Fig. 1, a floating body having other forms can be used in the present invention.

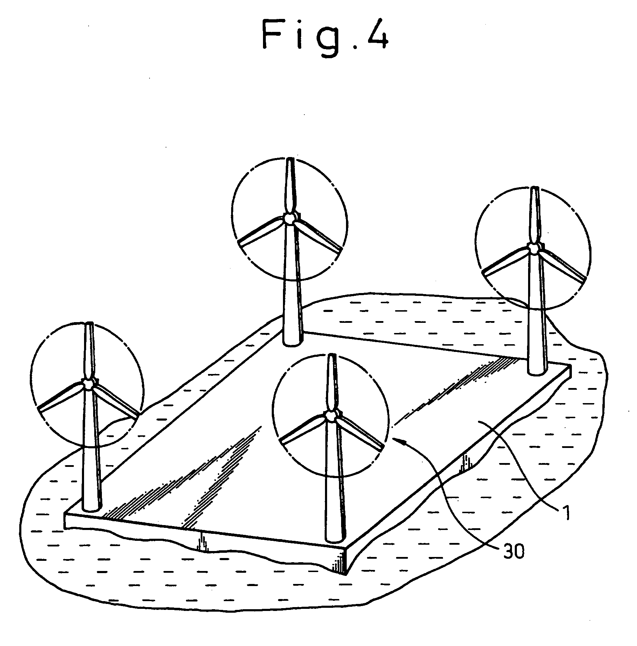

Figs. 4 to 6 show examples of floating bodies in other forms.

Fig. 4 shows a floating body constructed as a box-like hollow structure having a rectangular upper face. Windmill generator sets 30 are disposed on the respective corner of the rectangular upper face of the floating body. In this case, the hub distance between two diagonally adjacent windmill generator sets is larger than the hub distance between two windmill generator sets arranged along the side of the rectangular. Thus, a sufficiently large hub distance between two diagonally adjacent windmill generator sets can be obtained even if the hub distance between two windmill generator sets arranged along the side of the rectangular is reduced to minimum distance.

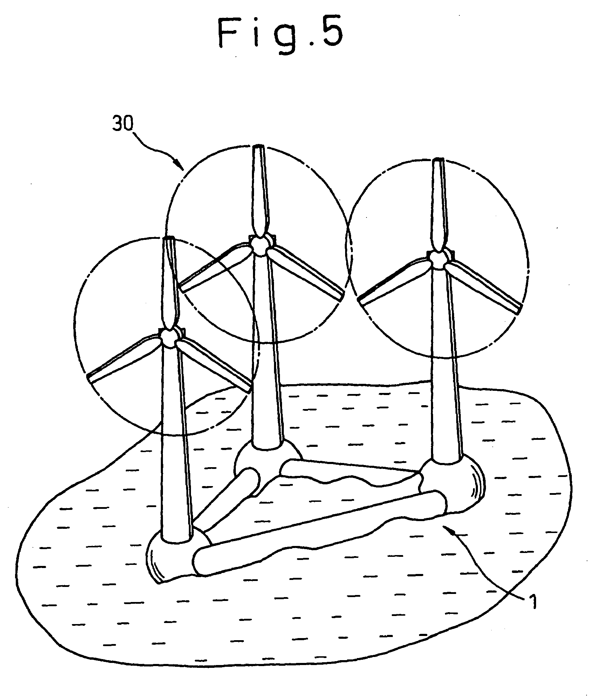

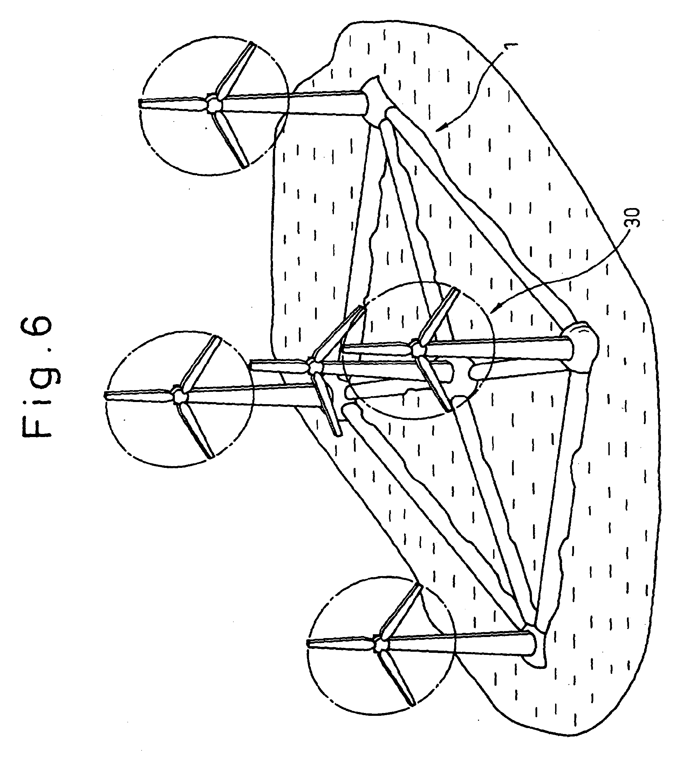

Fig. 5 shows a floating body having a triangular shape similar to that of Fig. 1. In this embodiment, however, steel pipes having circular cross sections are used instead of hollow rectangular cross section beam members in Fig. 1. In this embodiment, the construction cost of the floating body is further reduced by using a truss structure of steel pipes. Further, in the embodiments in Figs. 1 and 5, since the floating body has a triangle contour, the upper area of the floating body divided by the number of the windmill generator set becomes a minimum, whereby the construction cost of the floating body is minimized. However, it is also possible to form a triangular shaped floating body as a box-like structure similar to that in Fig. 4, instead of truss structure in Figs. 1 and 3. Further, as shown in Fig. 6, the rectangular shaped floating body may be formed as a truss structure using steel pipes or hollow rectangular cross section beam members.

As explained above, according to the present invention, the unit power generating cost of a floating type wind-powered generator plant can be largely reduced by disposing more than two windmill generator sets at a interval smaller than four times the rotor diameter.

## Claims

1. A wind-powered generator plant comprising a floating body (1) placed on water and a plurality of windmill generator sets (30) disposed on the floating body, **characterised in that** at least one pair of the windmill generator sets are disposed on the floating body in such a manner that the distance (L) between the centers of the rotors (31) of the windmills is more than one and a half and less than two times of the diameter (D) of the rotors of the windmills, wherein each windmill generator set comprises a tower (33) and a rotor (31), and the position of the rotor is controllable by turning around the center axis of the tower in response to the wind direction.

2. A wind-powered generator plant as set forth in claim 1, wherein said pair of the windmill generator sets is disposed in the direction of wind.

3. A wind-powered generator plant as set forth in one of the preceding claims, wherein the floating body is formed as a truss structure combining beams (11) having hollow cross sections.

4. A wind-powered generator plant as set forth in one of the preceding claims, wherein the floating body is formed as a triangular truss structure and each of three sides thereof is formed of a beam having a hollow cross section.

5. A wind-powered generator plant as set forth in claim 3 or 4, wherein the cross section of the beam is rectangular.

6. A wind-powered generator plant as set forth in claim 3 or 4, wherein the cross section of the beam is rectangular.

## Patentansprüche

1. Windenergie-Generatoranlage, umfassend einen Schwimmkörper (1), der auf dem Wasser platziert ist und eine Vielzahl von Windmühlen-Generatorgeräten (30) aufweist, die auf dem Schwimmkörper angeordnet sind, **dadurch gekennzeichnet, dass** zumindest ein Paar der Windmühlen-Generatorgeräte auf dem Schwimmkörper auf eine solche Weise angeordnet ist, dass die Distanz (L) zwischen den Zentren der Rotoren (31) der Windmühlen mehr als eineinhalb und weniger als zweimal dem Durchmesser (D) der Rotoren der Windmühlen entspricht, wobei jedes Windmühlen-Generatorgerät einen Turm (33) sowie einen Rotor (31) umfasst und die Position des Rotors durch Drehen des Turms um die zentrale Achse der Windrichtung folgend steuerbar ist.

2. Windenergie-Generatoranlage wie in Anspruch 1 beschrieben, wobei das Paar von Windmühlen-Generatorgeräten in der Windrichtung angeordnet ist.

3. Windenergie-Generatoranlage wie in einem der voranstehenden Ansprüche beschrieben, wobei der Schwimmkörper als Tragwerkstruktur ausgebildet ist, die Träger mit einem hohlen Querschnitt aufweist.

4. Windenergie-Generatoranlage wie in einem der voranstehenden Ansprüche beschrieben, wobei der Schwimmkörper als dreieckige Tragwerkstruktur ausgebildet ist und jede von deren drei Seiten aus einem Träger mit hohlem Querschnitt ausgebildet ist.

5. Windenergie-Generatoranlage wie in Anspruch 3 oder 4 beschrieben, wobei der Querschnitt des Trägers rechteckig ist.

6. Windenergie-Generatoranlage wie in Anspruch 3 oder 4 beschrieben, wobei der Querschnitt des Trägers rechteckig ist.

## Revendications

1. Centrale électrique à énergie éolienne, comprenant un corps flottant (1) placé sur de l'eau et une pluralité de groupes générateurs formant éoliennes (30) disposés sur le corps flottant, **caractérisée en ce qu'**au moins une paire des groupes générateurs formant éoliennes sont disposés sur le corps flottant de telle manière que la distance (L) entre les centres des rotors (21) des éoliennes soit supérieure à une fois et demie et inférieure à deux fois le diamètre (D) des rotors des éoliennes, dans laquelle chaque groupe générateur formant éolienne comprend une tour (33) et un rotor (31), et la position du rotor peut être commandée par une rotation autour de l'axe central de la tour, en réponse à la direction du vent.

2. Centrale électrique à énergie éolienne selon la revendication 1, dans laquelle ladite paire des groupes générateurs formant éoliennes est disposée dans la direction du vent.

3. Centrale électrique à énergie éolienne selon l'une des revendications précédentes, dans laquelle le corps flottant est formé en tant que structure en treillis combinant des poutres (11) ayant des sections transversales creuses.

4. Centrale électrique à énergie éolienne selon l'une des revendications précédentes, dans laquelle le corps flottant est formé en tant que structure en treillis en triangle, et chacun des trois côtés consiste en une poutre ayant une section transversale creuse.

5. Centrale électrique à énergie éolienne selon la revendication 3 ou 4, dans laquelle la section transversale de la poutre est rectangulaire.

6. Centrale électrique à énergie éolienne selon la revendication 3 ou 4, dans laquelle la section transversale de la poutre est rectangulaire.
